# EUROPÄISCHE PATENTANMELDUNG

(11) **EP 1 691 324 A1**
(43) Veröffentlichungstag der Anmeldung: **16.08.2006**
(21) Anmeldenummer: 05002652.5
(22) Anmeldetag: 09.02.2005
(51) Int. Cl.: G06Q 10/00

(54) **Datenstruktur zur Übermittlung von Daten**

(71) Anmelder: Deutsche Post AG, 53113 Bonn (DE)
(72) Erfinder: Kranz, Jürgen, 50374 Erftstadt (DE); Westerweller, Jörg, 51570 Windeck/Rosbach (DE)
(74) Vertreter: Jostarndt, Hans-Dieter

(57) **Zusammenfassung**

Es wird eine Datenstruktur zur Übermittlung von Daten in einem Filialsystem vorgeschlagen, das eine Anzahl von Kundenstationen umfasst, die mit mindestens einem Zentralrechner informationstechnisch verbunden sind. Die Datenstruktur weist einen unveränderlichen Datenrahmen auf, in welchem veränderliche, zu einem Geschäftsvorfall gehörende Daten eingeschrieben sind. Der Datenrahmen ist in einen Versionsnummern-, einen Schlüssel-, einen Vorgangs- sowie in einen Prüfdatenbereich gegliedert.

Der Schlüsselbereich enthält Identifikationsdaten, welche die Identifikation einer Filiale, einer Kundenstation, eines Anwendungsprogrammes in der Kundenstation sowie einer laufenden Nummer eines Datensatzes gestatten, der in der identifizierten Filiale auf der identifizierten Kundenstation mit dem identifizierten Anwendungsprogramm erzeugt wurde.
Der Vorgangsbereich beinhaltet fachliche Daten und ist in einen Geschäftsvorfall-, einen Grund-, einen Schlüssel- und einen Umgebungsdatenabschnitt gegliedert.

Schließlich ist der Prüfdatenbereich in drei Prüfdatenabschnitte gegliedert.

## Beschreibung

Die Erfindung betrifft eine Datenstruktur zur Übermittlung von Daten in einem Filialsystem. Insbesondere betrifft die Erfindung eine Datenstruktur zur Übermittlung von Daten in einem Filialsystem, das eine Anzahl von Kundenstationen umfasst, die mit mindestens einem Zentralrechner informationstechnisch verbunden sind. Die Datenstruktur weist einen unveränderlichen Datenrahmen auf, in welchem veränderliche, zu einem bestimmten Geschäftsvorfall gehörende Daten eingeschrieben sind.

Gegenwärtig gibt es eine ganze Reihe von Geschäftsfeldern, deren Rückgrat von einem weit verzweigten Filialsystem gebildet wird, das Kunden einen flächendeckenden Zugang zu den Dienstleistungen eines Unternehmens ermöglicht.

Beispielhaft werden an dieser Stelle Verkehrsunternehmen genannt, die ihren Kunden an zahlreichen Bahnhöfen und Flughäfen ihre Serviceleistungen anbieten. Hierzu gehören beispielsweise der Verkauf von Bahn- oder Flugkarten, die Annahme von Gepäck oder das Mieten von Kraftfahrzeugen.

Ein anderes Beispiel sind Postunternehmen, die in fast jedem Ort in einem Land den Kunden eine umfangreiche Auswahl von Postdienstleistungen zur Verfügung stellen, wie zum Beispiel die Annahme von Briefen und Paketen, der Verkauf von Postwertzeichen sowie eine ganze Palette von Bankdienstleistungen, wozu insbesondere die Rückzahlung von Bargeld von einem Konto, die Annahme von Bareinzahlungen und vieles mehr gehören.

Diese Beispiele zeigen, dass in jeder der zahlreichen Filialen ein vielfältiges Angebot von Verkaufs- und Beratungsdienstleistungen angeboten wird. Es ist offensichtlich, dass diese Dienstleistungen aus Gründen der Kosteneffizienz und Sicherheit durch Informationstechnik unterstützt sind.

Konkret bedeutet dies zum Beispiel beim Abheben von Bargeld von einem Konto in einer Postfiliale, dass der Kunde durch das Einlesen von Daten von einer Kundenkarte identifiziert wird und gleichzeitig der Kontostand seines Bankkontos überprüft wird. Der Mitarbeiter in der Postfiliale wird sodann über das informationstechnische System (IT-System) darüber informiert, ob er eine Auszahlung vornehmen darf oder nicht.

In dem anderen eingangs genannten Beispiel, nämlich dem Verkauf von Bahn- oder Flugkarten, wird ein Kunde ebenfalls mit Hilfe seiner Kundenkarte identifiziert, und die verkaufte Bahn- oder Flugkarte wird bereits beim Kauf der Fahrkarte in einem Bonusprogramm der entsprechenden Gesellschaft durch Hinzufügen einer bestimmten Anzahl von Bonuspunkten berücksichtigt.

Bereits aus diesen wenigen Beispielen wird klar, dass die Abbildung von Geschäftsprozessen in einem Filialsystem einen recht hohen informationstechnischen Aufwand erfordert. In der Regel erfordern selbst relativ einfache Geschäftsvorgänge, dass mehrere unterschiedliche Arten von Daten zwischen einer Filiale und einer zentralen Datenbank oder einem Zentralrechner ausgetauscht werden müssen.

Die genannte Komplexität der informationstechnischen Systeme erweist sich spätestens dann als sehr nachteilig, wenn Geschäftsabläufe verändert werden müssen. Das ist beispielsweise stets dann der Fall, wenn eine neue Dienstleistung in ein vorhandenes Angebotsspektrum aufgenommen werden soll oder wenn eine bereits angebotene Dienstleistung verändert werden muss.

Hiervon ausgehend ist es eine Aufgabe der vorliegenden Erfindung, eine Datenstruktur vorzuschlagen, welche die einfache Erweiterung und Änderung eines Filialsystems unterstützt.

Erfindungsgemäß wird diese Aufgabe durch eine Datenstruktur gelöst, die einen unveränderlichen Datenrahmen aufweist, in welchem veränderliche, zu einem Geschäftsvorfall gehörende Daten eingeschrieben sind. Der Datenrahmen ist in einen Versionsnummer-, einen Schlüssel-, einen Vorgangs- sowie in einen Prüfdatenbereich gegliedert. Der Schlüsselbereich enthält Identifikationsdaten, welche die Identifikation einer Filiale, einer Kundenstation, eines Anwendungsprogrammes in der Kundenstation sowie einer laufenden Nummer eines Datensatzes gestatten, der in der identifizierten Filiale auf der identifizierten Kundenstation mit dem identifizierten Anwendungsprogramm erzeugt wurde.

In einer besonders bevorzugten Ausführungsform der Erfindung beinhaltet der Vorgangsbereich fachliche Daten und ist in einen Geschäftsvorfall-, einen Grund-, einen Schlüssel- und einen Umgebungsdatenabschnitt gegliedert.

In einer besonders zweckmäßigen Ausführungsform der Erfindung ist der Prüfdatenbereich in drei Prüfdatenabschnitte gegliedert.

In einer besonders bevorzugten Ausführungsform der Datenstruktur zur Übermittlung von Daten in einem Filialsystem kann der erste Prüfdatenabschnitt für die Prüfung an einem Frontend vorgesehen sein, der zweite Prüfdatenabschnitt für die Prüfung vor dem Übergang der Rohdaten in ein anderes Datenverarbeitungssystem und der dritte Prüfdatenabschnitt zur Überprüfung einer korrekten Filterung der Rohdaten.

Bei einer besonders bevorzugten Ausführungsform der erfindungsgemäßen Datenstruktur ist der Geschäftsvorfalldatenabschnitt in zwei Unterabschnitte gegliedert, die Daten zum Geschäftsvorfalltyp und zum Geschäftsvorfallnamen enthalten.

Bei einer weiteren zweckmäßigen Ausführungsform der erfindungsgemäßen Datenstruktur ist der Grunddatenabschnitt in zwei Unterabschnitte gegliedert, die Daten zur Art der Verkettung von Rohdatensätzen und einen Schlüssel für den begründenden Rohdatensatz enthalten.

Bei noch einem weiteren vorteilhaften Ausführungsbeispiel der erfindungsgemäßen Datenstruktur ist der Schlüsseldatensatz in drei Unterabschnitte gegliedert, die Daten zur Kennzeichnung der erzeugenden Kasse, Daten zur Nummer des fachlichen Journals sowie Daten zur Nummer des fachlichen Journalsatzes enthalten. In diesem Fall ist es vorteilhaft, wenn die Nummern des fachlichen Journalsatzes innerhalb eines fachlichen Journals aufsteigen.

Bei einer besonders bevorzugten Ausführungsform der erfindungsgemäßen Datenstruktur kann der Umgebungsdatenabschnitt technische sowie fachliche Parameter enthalten und in drei Unterabschnitte gegliedert sein, die Daten über die Zugehörigkeit von Rohdatensätzen zu Sessions, Daten zu Zeitangaben sowie Daten über den Benutzer enthalten.

Eine weitere Aufgabe der Erfindung ist es, ein Filialsystem vorzuschlagen, das einfach zu erweitern und an neue Anforderungen anpassbar ist.

Diese Aufgabe wird erfindungsgemäß durch ein Filialsystem mit einer Anzahl von Kundenstationen gelöst, die mit einem Zentralrechner informationstechnisch verbunden sind. Die Kundenstationen des Filialsystems sind so eingerichtet, dass die mit den Kundenstationen ausgetauschten Daten eine Datenstruktur der eingangs beschriebenen erfindungsgemäßen Art aufweisen.

Bei einer Weiterbildung der Erfindung weist das Filialsystem weitere datentechnische Komponenten auf. Die weiteren datentechnischen Komponenten sind ebenfalls so eingerichtet, dass die mit den Komponenten ausgetauschten Daten eine Datenstruktur der eingangs beschriebenen erfindungsgemäßen Art aufweisen.

In den Zeichnungen werden die Grundstruktur eines informationstechnischen Systems veranschaulicht sowie die Struktur der erfindungsgemäßen Datenstruktur. Es zeigen:
- Figur 1: ein schematisches Blockdiagramm eines informationstechnischen Systems;
- Figur 2: ein schematisches Blockdiagramm, das den logischen Ablauf eines Geschäftsvorganges veranschaulicht;
- Figur 3: ein schematisches Blockdiagramm, das den Austausch von Rohdaten zwischen logischen Komponenten eines informationstechnischen Systems illustriert und
- Figur: die Struktur der erfindungsgemäßen Rohdaten.

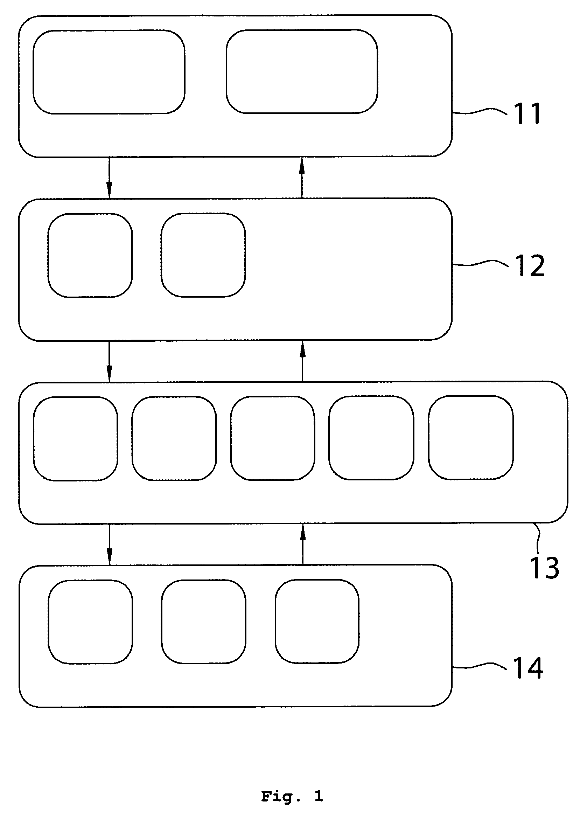

Figur 1 zeigt ein schematisches Blockdiagramm eines informationstechnischen Filialsystems. Diese Struktur ist der Übersichtlichkeit halber auf eine einzige Filiale beschränkt, lässt sich aber von einem Fachmann ohne weiteres auf ein System mit vielen Filialen übertragen.

In der Filiale ist jeder einzelnen in der Filiale angebotenen Dienstleistung ein Geschäftsvorgang zugeordnet, für den eine programmtechnische Entsprechung in dem IT-System vorgesehen ist.

Der Mitarbeiter in der Filiale nimmt die Kundenwünsche entgegen und erfasst Kundendaten, Kundenwünsche und so weiter, beispielsweise mit Hilfe einer grafischen Benutzungsoberfläche, die den Mitarbeiter bei der vollständigen Eingabe aller erforderlichen Angaben unterstützt. Der Arbeitsplatz, an dem der Mitarbeiter diese Tätigkeiten ausführt, wird häufig auch als Frontend 11 bezeichnet.

Die auf diese Weise erfassten Kundenwünsche und Kundendaten werden zu einer tiefer liegenden Komponenten Infrastrukturschicht 12 des IT-Systems weitergegeben. Die Infrastrukturschicht 12 kümmert sich eigenständig um die Steuerung von peripheren Komponenten, ohne dass der Mitarbeiter in die Abläufe eingreifen müsste. Zum Beispiel werden Druckaufträge automatisch an einen Fahrschein- oder Belegdrucker weitergeleitet, oder eine automatische Kasse wird zur Ausgabe eines bestimmten Geldbetrages veranlasst.

Alle diese Vorgänge werden in einem Hintergrundsystem 13 protokolliert und Kundendaten werden gespeichert. Darüber hinaus werden in dem Hintergrundsystem 13, das auch als Filial-Backend bezeichnet wird, Daten gespiegelt und archiviert, um die Grundsätze ordentlicher Buchführung zu verwirklichen. Das Frontend 11, die Infrastrukturschicht 12 und das Filial-Backend 13 bilden ein Filialsystem.

Schließlich ist es für einige Geschäftsvorgänge erforderlich, dass das Filialsystem Daten mit anderen Systemen austauscht, zum Beispiel mit der Datenbank eines Bankrechners, um festzustellen, ob die von einem Kunden gewünschte Barauszahlung auf seinem Konto überhaupt gedeckt ist. Solche Systeme außerhalb einer Filiale werden auch als Umsysteme 14 bezeichnet. Die Übertragung einer solchen Abfrage wird ebenfalls von dem Filial-Backend 13 ohne Eingriffe des Mitarbeiters selbsttätig ausgeführt.

Werden Daten von den Umsystemen 14 zurück übertragen, werden sie von dem Filial-Backend 13, der Infrastrukturschicht 12 bis zum Frontend 11 des Mitarbeiters übertragen, damit dieser dem Inhalt der Daten entsprechend aktiv wird. In dem vorliegenden Beispiel würde er also den gewünschten Geldbetrag auszahlen oder nicht.

Der Datenaustausch zwischen den einzelnen Schichten des Filialsystems und den Umsystemen 14 sind in Figur 1 durch Pfeile angedeutet.

Ein Geschäftsvorgang setzt sich dabei vorzugsweise aus verschiedenen Teilvorgängen zusammen, die teilweise Bestandteil mehrere Geschäftsvorgängen sein können. Durch diese modulare Struktur von Geschäftsvorgängen wird eine redundante Implementierung häufig verwendeter Teilvorgängen, wie beispielsweise einer Erfassung von Kunden von einer Chipkarte, vermieden.

Die Teilvorgänge können dabei zu Sessions verschiedener Sessionarten zusammengefasst werden, wobei eine Session beispielsweise alle Teilvorgänge eines Geschäftsvorgangs umfasst. Eine andere mögliche Session umfasst beispielsweise alle innerhalb eines bestimmten Zeitintervalls durchgeführten Geschäftsvorgänge.

Eine buchhaltungstechnische Zusammenfassung von Geschäftsvorgängen, bzw. bei der Bearbeitung von Geschäftsvorgängen erfasster buchhaltungsrelevanter Daten, erfolgt anhand eines so genannten Journals. Diese Zusammenfassung kann dabei der Zusammenfassung von Geschäftsvorgängen in einer Session entsprechen, oder unabhängig von der Vorgabe von Sessions definiert werden.

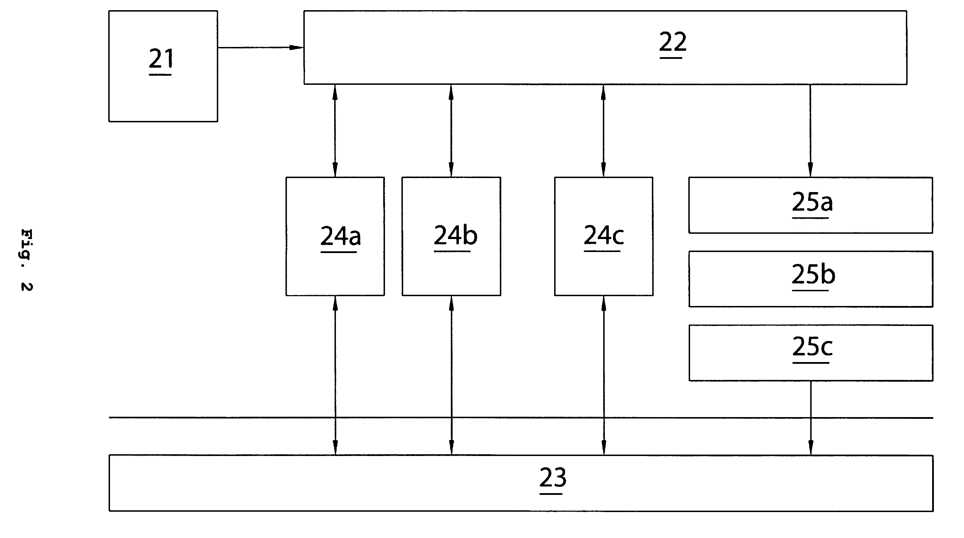

In Figur 2 ist der logische Aufbau eines Geschäftsvorganges dargestellt.

Ein Geschäftsvorgang beginnt mit einem Stammdatensatz 21, der im Laufe der Bearbeitung des Geschäftsvorganges in der Filiale durch Eingabe des Mitarbeiters beziehungsweise durch im Filialsystem vorhandene Daten Schritt für Schritt ergänzt bzw. angepasst wird.

Bei dem Stammdatensatz 21 handelt es sich dabei um einen Datensatz in einer Datenbank des Filialsystems der beispielsweise Kundendaten oder Angaben über verkaufte Waren enthält.

Hierbei findet beständig ein Datenaustausch zwischen dem als Block 22 veranschaulichten Geschäftsvorgang und dem als Block 23 illustrierten Filialsystem statt. Der Austausch von Datensätzen zwischen dem Geschäftsvorgang und dem Filialsystem ist in Figur 2 durch Blöcke 24a, 24b und 24c illustriert.

Die Gesamtheit der Daten wird am Ende des Geschäftsvorganges zu Rohdatensätzen 25a, 25b, 25c kombiniert, deren Struktur im Folgenden noch näher beschrieben werden wird. Auch in Figur 2 sind die Datenströme durch Pfeile angedeutet.

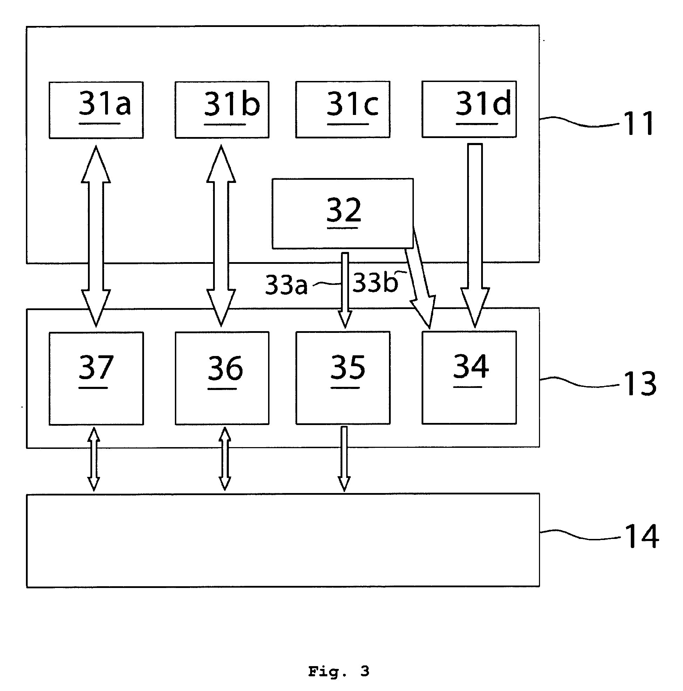

In Figur 3 ist in einem schematischen Blockdiagramm der logische Ablauf von dem Austausch von Rohdaten zwischen den einzelnen Schichten des Gesamtsystems gezeigt. Die Rohdaten sind in Rohdatensätze gegliedert, wie im Folgenden noch im Einzelnen erläutert wird.

In Figur 3 sind zur beispielhaften Veranschaulichung vier Datenblöcke 31a, 31b, 31c und 31d dargestellt. Jeder der Datenblöcke 31a bis 31d enthält applikationsspezifische Datenstrukturen als Basis für Rohdaten. Es wird bemerkt, dass es sich bei diesen Datenstrukturen jedoch nicht um Rohdaten handelt. Erst ein Rohdatenmodul 32 transformiert die applikationsspezifischen Datenstrukturen aus dem Datenblock 31c in Rohdatensätze.

Das Rohdatenmodul 32 führt somit einen Datentransformationsprozess aus. In einem Transformationsschritt, der durch zwei Pfeile 33a und 33b veranschaulicht ist, werden die Rohdatensätze von dem Frontend 11 zu dem Filial-Backend 12 übertragen und dort sowohl in einem Archivspeicher 34 als auch in einer Rohdatenservicekomponente 35 gespeichert.

Die Rohdatenservicekomponente 35 überträgt die Rohdaten an die Umsysteme 14, wenn dies für einen bestimmten Geschäftsvorgang erforderlich sein sollte.

Zur Durchführung der Grundsätze ordentlicher Buchführung werden auch die applikationsspezifischen Daten eines Geschäftsvorganges abgespeichert.

Die Datenblöcke 31a und 31b repräsentieren Interaktions- und Prozessdaten, die nicht in Rohdaten umgewandelt werden, sondern sie werden unverändert in eigens dafür vorgesehene Servicekomponenten 36 und 37 übertragen. Die Servicekomponenten 36 und 37 sorgen auch für den Austausch der Interaktions- und Prozessdaten zwischen dem Filial-Backend 13 und den Umsystemen 14.

Die einheitliche Erfassung und Bearbeitung von Daten, die für einzelne Geschäftsvorgänge relevant sind, im Rahmen einer einheitlichen Rohdatenstruktur hat den Vorteil, dass neue Geschäftsvorgänge sehr leicht in eine bestehende Infrastruktur integrierbar sind, weil durch die vereinheitlichte Datenstruktur die Kompatibilität sichergestellt ist. Umgekehrt bedeutet das, dass die Rohdatenstruktur den Aufbau bzw. die Funktionsweise der Komponenten der datentechnischen Infrastruktur festlegt. Bei der Realisierung der Ziels der Kompatibilität wirken die erfindungsgemäße Rohdatenstruktur und entsprechend eingerichtete Komponenten der Infrastruktur zusammen.

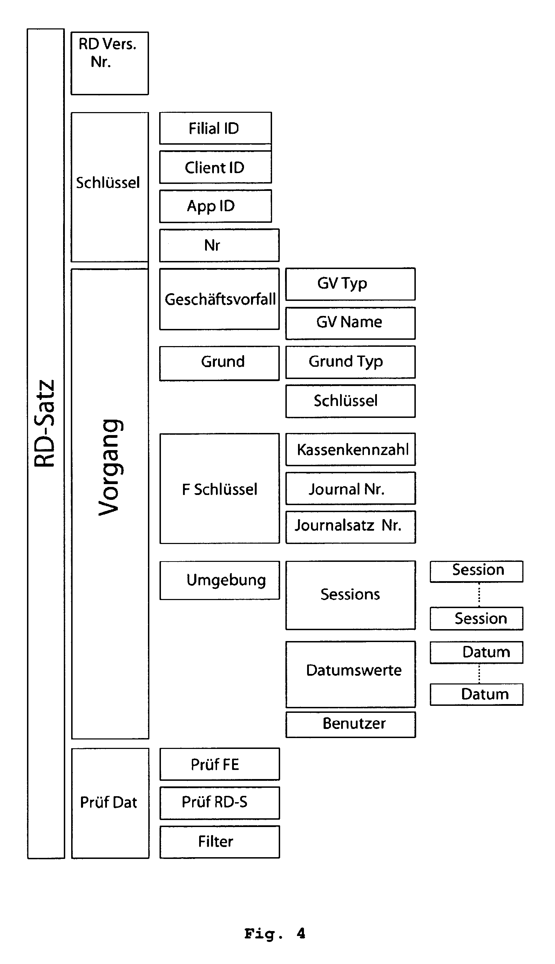

Figur 4 zeigt den allgemeinen Aufbau der Rohdatenstruktur bzw. eines Rohdatensatzes in Gestalt von einzelnen Blöcken, um die einzelnen Datenabschnitte zu veranschaulichen.

Ein Rohdatensatz besteht weist einen festen Rahmen auf, der von seiner Struktur her statisch ist. In diesem Rahmen sind die technischen und fachlichen Daten untergebracht, die über alle Rohdatensätze gesehen relevant sind. Der Rahmen ist in vier Blöcken gegliedert.

Im Rahmen befindet sich unter anderem das Element Geschäftsvorfall. Der Geschäftsvorfall enthält die fachlichen Daten, die von Geschäftsvorfalltyp zu Geschäftsvorfalltyp variieren. Die zugrunde liegenden Schemata sind für jeden Geschäftsvorfalltyp unterschiedlich. Die Bedeutung der einzelnen in Figur 4 gezeigten Blöcke ist wie folgt:
- FilialID bezeichnet die Kennung einer bestimmten Filiale.
- ClientID bezeichnet die Kennung eines Rechners in der Filiale.
- ApplD bezeichnet die Kennung einer Applikation auf einem Rechner in der Filiale. Mit dieser Kennung wird vermieden, dass alle auf einem Rechner in der Filiale laufenden Applikationen von einem zentralen Schlüsselgenerator mit Schlüssel versorgt werden müssen.
- Nr. gibt die laufende Nummer eines Rohdatensatzes an, der in einer konkreten Filiale auf dem konkreten Client unter der konkreten Applikation erzeugt wurde.
- Vorgang ist ein Element, welches alle fachlichen Daten zu einem Geschäftsvorfall beinhaltet.
- Geschäftsvorfall ist eine spezielle fachliche Ausprägung auf Basis der Analyse der Vorgangsarten unter Berücksichtigung des Schichtenmodells.
- Grund ist ein Verknüpfungselement für die Rohdatensätze untereinander.
- GrundTyp gibt den Typ der Verkettung/des Grundes an.
- Schlüssel ist der Schlüssel des begründenden Rohdatensatzes.
- FSchlüssel bildet die wesentlichen buchhalterischen Identifikationsgrößen ab.
- KassenKennZahl gibt die Kennzeichnung der erzeugenden Kasse an.
- JournalNr bezeichnet die Nummer des fachlichen Journals innerhalb der Kassenkennzahl.
- JournalsatzNr ist die Nummer des fachlichen Journalsatzes. Die Journalsatznummern sind aufsteigend innerhalb der Journalnummer zu vergeben.
- Umgebung bezeichnet spezielle technische und fachliche Parameter.
- Sessions ist die Sessionart, die die Zugehörigkeit von Rohdatensätzen zu Sessions ermöglichen.
- Sessionelemente ermöglichen die Zugehörigkeit von Rohdatensätzen von speziellen Sessions.
- DatumsWerte sind das Vaterelement von Datumswerten.
- Datum(n) bezeichnet einen Zeitstempel.
- Benutzer gibt einen berechtigten Benutzer an.
- PruefDat ist das Vaterelement für Prüfflags.
- PrüfFE ist das Prüfflag für die Prüfung am Frontend.
- PrüfRD_S ist das Prüfflag für die Prüfung direkt vor Verantwortungsbereich der Umsysteme.
- FilterOK ist das Prüfflag, das die Korrektheit der Filterung angibt.

Die Schemata, die das in Figur 4 dargestellte Rohdatenmodell bilden, werden als reiche Schemata bezeichnet. Sie beinhalten keine spezifischen Eigenschaften des Frontends, mit dem ein Rohdatensatz erzeugt wird.

Die reichen Schemata bilden die Obermenge aller möglichen Rohdaten, die mit unterschiedlichen Frontends erzeugt werden. Die erzeugenden und/oder verarbeitenden Systeme können Spezialisierungen der reichen Schemata definieren und verwenden.

Die Spezialisierungen der reichen Schemata können zur Abbildung der eigenen im Vergleich zu den reichen Schemata spezielleren Datenanforderungen sinnvoll sein und werden als arme Schemata bezeichnet.

Der Vorteil dieses Konzepts besteht darin, dass die armen Schemata auf Basis der zugehörigen reichen Schemata automatisch überprüfbar als deren Spezialisierung definierbar sind.

Hierbei ist zu beachten, dass ein armes Schema eindeutig einem reichen Schema zugeordnet sein muss. Alle Pflichtelemente des reichen Schemas müssen auch Bestandteile des armen Schemas sein. Allerdings kann das arme Schema weniger Unterstrukturen, weniger Elemente und so weiter im Vergleich zu dem reichen Schema aufweisen.

Ein armes Schema kann auch Beschränkungen der Elemente hinsichtlich ihrer Länge und Ausprägungen aufweisen im Vergleich zu dem zugehörigen reichen Schema. Umgekehrt gilt dies jedoch nicht.

Bei der Gestaltung der Struktur des Rohdatensatzes ist berücksichtigt worden, dass die Elemente eines Rohdatensatzes die kleinste fachlich-logische Einheit eines Geschäftsvorganges bilden.

Die kleinste fachliche Einheit ist die Menge aller fachlich zusammengehörenden Elemente eines Geschäftsvorgangs, die eine sinnvolle Verarbeitung in allen beteiligten Systemen ermöglicht, nämlich dem Frontend 11, dem Filial-Backend 13 und den Umsystemen 14.

Es ist allerdings auch möglich, dass mehrere Rohdatensätze gemeinsam eine fachliche Einheit abbilden. In diesem Fall bildet nur die Gesamtheit aller Rohdatensätze einen bestimmten Geschäftsvorgang vollständig ab. Um die erforderliche Datenmenge möglichst gering zu halten, besteht in diesem Fall zwischen den Rohdatensätzen keine Redundanz. Das bedeutet, die Rohdatensätze sind disjunkt.

Die Datenströme der Filialsysteme lassen sich, angelehnt an die Struktur des IT-Systems, in Rohdaten und Nichtrohdaten unterscheiden. Nichtrohdaten sind zum Beispiel Daten, die bei der Kommunikation mit dem Prozessservice relevant sind. Rohdaten und Nichtrohdaten werden getrennt voneinander archiviert, wie dies zum Beispiel aus Figur 3 ersichtlich ist.

## Patentansprüche

1. Datenstruktur zur Übermittlung von Daten in einem Filialsystem, das eine Anzahl von Kundenstationen umfasst, die mit mindestens einem Zentralrechner informationstechnisch verbunden sind, wobei die Datenstruktur einen unveränderlichen Datenrahmen (RD_Satz) aufweist, in welchem veränderliche, zu einem Geschäftsvorfall gehörende Daten eingeschrieben sind,
**dadurch gekennzeichnet,**
**dass** der Datenrahmen in einen Versionsnummer- (RDVersionsNr), einen Schlüssel, einen Vorgangs- sowie in einen Prüfdatenbereich (PruefDat) gegliedert ist und dass der Schlüsselbereich (Schluessel) Identifikationsdaten enthält, welche die Identifikation einer Filiale (FilialID), einer Kundenstation (Client ID), eines Anwendungsprogrammes (ApplD) in der Kundenstation sowie einer laufenden Nummer (Nr) eines Datensatzes gestatten, der in der identifizierten Filiale auf der identifizierten Kundenstation mit dem identifizierten Anwendungsprogramm erzeugt wurde.

2. Datenstruktur nach Anspruch 1,
**dadurch gekennzeichnet,**
**dass** der Vorgangsbereich (Vorgang) fachliche Daten beinhaltet und in einen Geschäftsvorfall- (GV), einen Grund-(Grund), einen Schlüssel- (Schuessel) und einen Umgebungsdatenabschnitt (Umgebung) gegliedert ist.

3. Datenstruktur nach einem oder beiden der Ansprüche 1 und 2,
**dadurch gekennzeichnet,**
**dass** der Prüfdatenbereich (PruefDat) in drei Prüfdatenabschnitte (PruefFE, Pruef RD_S, FilterOK) gegliedert ist.

4. Datenstruktur nach einem oder mehreren der vorangegangenen Ansprüchen,
**dadurch gekennzeichnet,**
**dass** der erste Prüfdatenabschnitt (PruefFE) für die Prüfung am Frontend vorgesehen ist und der zweite Prüfdatenabschnitt (PruefRD-S) für die Prüfung vor dem Übergang der Rohdaten in ein anderes Datenverarbeitungssystem und der dritte Prüfdatenabschnitt (FilterOK) zur Überprüfung einer korrekten Filterung der Rohdaten vorgesehen ist.

5. Datenstruktur nach einem oder mehreren der vorangegangenen Ansprüche,
**dadurch gekennzeichnet,**
**dass** der Geschäftsvorfalldatenabschnitt in zwei Unterabschnitte gegliedert ist, die Daten zum Geschäftsvorfalltyp (GVTyp) und zum Geschäftsvorfallnamen (GVName) enthalten.

6. Datenstruktur nach einem oder mehreren der vorangegangenen Ansprüche,
**dadurch gekennzeichnet,**
**dass** der Grunddatenabschnitt (Grund) in zwei Unterabschnitte gegliedert ist ,die Daten zu der Art einer Verkettung von Rohdatensätzen und einem Schlüssel (Schluessel) für einen begründenden Rohdatensatz enthalten.

7. Datenstruktur nach einem oder mehreren der vorangegangenen Ansprüche,
**dadurch gekennzeichnet,**
**dass** der Schlüsseldatensatz (FSchluessel) in drei Unterabschnitte gegliedert ist, die Daten zur Kennzeichnung der erzeugenden Kasse (KassenKennZahl), Daten zur Nummer des fachlichen Journals (JournalNr) sowie Daten zur Nummer des fachlichen Journalsatzes (JournalsatzNr) enthalten.

8. Datenstruktur nach einem oder mehreren der vorangegangenen Ansprüche,
**dadurch gekennzeichnet,**
**dass** die Nummern des fachlichen Journalsatzes innerhalb eines fachlichen Journals aufsteigen.

9. Datenstruktur nach einem oder mehreren der vorangegangenen Ansprüche,
**dadurch gekennzeichnet,**
**dass** der Umgebungsdatenabschnitt (Umgebung) technische sowie fachliche Parameter enthält und in drei Unterabschnitte gegliedert ist, die Daten (Sessions) über die Zugehörigkeit von Rohdatensätzen zu Sessions, Daten (Datum) zu Zeitangaben sowie Daten (Benutzer) über den Benutzer enthalten.

10. Filialsystem mit einer Anzahl von Kundenstationen, die mit einem Zentralrechner informationstechnisch verbunden sind,
**dadurch gekennzeichnet,**
**dass** die Kundenstationen des Filialsystems so eingerichtet sind, dass die mit den Kundenstationen ausgetauschten Daten eine Datenstruktur nach einem oder mehreren der vorstehenden Ansprüche aufweisen.

11. Filialsystem nach Anspruch 10,
**dadurch gekennzeichnet,**
**dass** das Filialsystem weitere datentechnische Komponenten aufweist, die so eingerichtet sind, dass die mit den Komponenten ausgetauschten Daten eine Datenstruktur nach einem oder mehreren der vorstehenden Ansprüche aufweisen.
